# EUROPÄISCHE PATENTSCHRIFT

(11) **EP 2 179 652 B1**
(45) Veröffentlichungstag und Bekanntmachung des Hinweises auf die Patenterteilung: **08.05.2019**
(21) Anmeldenummer: 08015973.4
(22) Anmeldetag: 10.09.2008
(51) Int. Cl.: A01N 63/02, A01P 1/00

(54) **Verwendung eines antibakteriellen Mittels zur Behandlung von bakteriellen Infektionen bei Kulturpflanzen**
Use of an antibacterial agent for treating bacterial infection in crop plants
Utilisation d'un agent antibactérien pour le traitement des infections bactériennes chez les plantes cultivées

(43) Veröffentlichungstag der Anmeldung: 28.04.2010
(73) Patentinhaber: ABiTEP GmbH Gesellschaft für AgroBioTechnische Entwicklung und Produktion, 12489 Berlin (DE)
(72) Erfinder: Borriss, Rainer, Prof. Dr., 16548 Glienicke (DE); Borriss, Michael, Dr., 17489 Greifswald (DE); Harksen, Erika, Dr., 12559 Berlin (DE); Beifort, Paul, Dipl.Ing, 10367 Berlin (DE); Junge, Helmut, Dr., 15366 Hoppegarten (DE)
(74) Vertreter: Baumbach, Friedrich

(56) Entgegenhaltungen:
- EP-A- 0 128 505
- WO-A-00/03009
- WO-A-2005/116061
- DATABASE WPI Week 197539 Thomson Scientific, London, GB; AN 1975-64700W XP002515591 & JP 50 049497 A (SAPPORO BREWERIES) 2. Mai 1975 (1975-05-02)
- ZIMMERMAN S B ET AL: "Difficidin and oxydifficidin: novel broad spectrum antibacterial antibiotics produced by Bacillus subtilis. I. Production, taxonomy and antibacterial activity" JOURNAL OF ANTIBIOTICS, JAPAN ANTIBIOTICS RESEARCH ASSOCIATION, TOKYO, JP, Bd. 40, Nr. 12, 1. Januar 1987 (1987-01-01), Seiten 1677-1681, XP003012623 ISSN: 0021-8820
- CHEN XIAO HUA ET AL: "Comparative analysis of the complete genome sequence of the plant growth-promoting bacterium Bacillus amyloliquefaciens FZB42" NATURE BIOTECHNOLOGY, NATURE PUBLISHING GROUP, NEW YORK, NY, US, Bd. 25, Nr. 9, 1. September 2007 (2007-09-01), Seiten 1007-1014, XP002493384 ISSN: 1087-0156 [gefunden am 2007-08-19]
- IDRIS ELSORRA E ET AL: "Use of Bacillus subtilis as biocontrol agent. VI. Phytohormonelike action of culture filtrates prepared from plant growth-promoting Bacillus amyloliquefaciens FZB24, FZB42, FZB45 and Bacillus subtilis FZB37" ZEITSCHRIFT FUER PFLANZENKRANKHEITEN UND PFLANZENSCHUTZ, Bd. 111, Nr. 6, November 2004 (2004-11), Seiten 583-597, XP002515590 ISSN: 0340-8159
- DATABASE WPI Week 200774 Thomson Scientific, London, GB; AN 2007-787766 XP002515592 & CN 1 952 116 A (UNIV LANZHOU) 25. April 2007 (2007-04-25)
- DATABASE WPI Week 200676 Thomson Scientific, London, GB; AN 2006-731082 XP002515593 & CN 1 792 167 A (UNIV YUNNAN AGRIC) 28. Juni 2006 (2006-06-28)
- DATABASE WPI Week 199832 Thomson Scientific, London, GB; AN 1998-369862 XP002515594 & JP 10 146187 A (ASADA SHOJI KK) 2. Juni 1998 (1998-06-02)
- DATABASE WPI Week 199948 Thomson Scientific, London, GB; AN 1999-566397 XP002515595 & JP 11 246324 A (NORINSUISANSHO SANSHI KONCHU) 14. September 1999 (1999-09-14)

## Beschreibung

Die Erfindung betrifft die Verwendung eines natürlichen Mittels zur Behandlung von bakteriellen Infektionen an Kulturpflanzen, insbesondere Feuerbrand, bei Obstgehölzen. Anwendungsgebiete der Erfindung sind der Pflanzenschutz, die Biotechnologie und die Landwirtschaft.

### Stand der Technik

Die umweltfreundliche Kontrolle von mikrobiell verursachten Erkrankungen von Kulturpflanzen stellt eine dringende Notwendigkeit dar, um den zunehmenden Nahrungsbedarf einer wachsenden Weltbevölkerung zu decken. Heutige Praktiken beruhen größtenteils auf der genetischen Resistenz der Wirtspflanze, einem abgestimmten Management von Pflanze und Umwelt und dem Einsatz synthetischer Pestizide, die nach andauernder Anwendung ihre Wirksamkeit einbüssen und häufig einen ungünstigen Einfluss auf die Umwelt ausüben. Ein Beispiel stellt die "Feuerbrand"erkankung von Apfel und Birne dar. Sie wird durch das Bakterium *Erwinia amylovora* hervorgerufen. Während der letzten vier Dekaden hat sie sich in Europa ausgebreitet. Im Jahr 2007 hat ein starker Feuerbrandbefall zu schwerwiegenden Verlusten bei den Apfelbauern in Deutschland, Österreich und der Schweiz geführt. *E*. *amylovora* ist ein Gram-negatives, stäbchenförmiges Bakterium, welches zur Familie der Enterobacteriaceae gehört.

Die Infektion der Pflanze durch den Mikroorganismus läuft folgendermaßen ab. Nachdem *E. amylovora* durch Insekten auf die Oberflächen von Blüten gelangt ist, vermehrt sich der Erreger auf den Stigmata, bevor er durch die Nektarthoden der Blüten oder durch Wunden der Blätter oder Zweige bei warmen und feuchten Wetterkonditionen in das Pflanzengewebe eindringt.

Da hygienische Maßnahmen die Verbreitung der Krankheit bisher nicht stoppen konnten, besteht ein dringender Bedarf an einem Feuerbrand-Kontroll-Management mit geeigneten Kontrollmitteln.

Eine effektive Möglichkeit zur Bekämpfung der Krankheit ist die Anwendung von Streptomycinsulfat, eine Methode, die in Nordamerika vielfach genutzt wird. In Europa ist diese Methode jedoch verboten, da sie das Risiko der Entwicklung von Antibiotikaresistenzen in anderen als den Zielbakterien mit sich bringt.

In DE 102006045505 wird ein Mittel zur Vorbeugung und Behandlung von Feuerbrand vorgeschlagen, welches als Wirkstoff Ameisensäure und ihre Salze enthält. Doch konnten mit diesem Mittel bisher noch keine befriedigenden Ergebnisse erzielt werden. Zudem werden dem Mittel oftmals chemische Hilfsstoffe beigefügt, welche wiederum eine negative Auswirkung auf die Umwelt haben.

Die Suche nach einer umweltfreundlichen, biologischen Alternative für die Bekämpfung dieser und anderer Pflanzenkrankheiten ("biologisches Pflanzenschutzmittel") ist daher eine dringende Notwendigkeit. Mikroorganismen, die antagonistisch gegen phytopathogene Bakterien und Pilze wirken, stellen hierbei eine interessante Möglichkeit dar. Im Falle von Feuerbrand wurde die Verwendung der antagonistisch wirkenden Hefe *Aureobasidium pullulans* ("BlossomProtect") im biologischen Obstbau empfohlen (Kunz and Haug, 2006; Kunz et al., 2008). Bedauerlicherweise ist BlossomProtect jedoch nicht mischbar mit Fungiziden, welche zur Vermeidung von Apfelschorf eingesetzt werden. Dies macht eine gesonderte Behandlung notwendig, was für die Anwendung in der Praxis äußerst unvorteilhaft ist. Zudem ist - ähnlich anderen biologischen Pflanzenschutzmitteln - der Anwendungserfolg nicht konstant und von nicht näher bekannten weiteren Faktoren abhängig. Ein Hauptproblem bei der industriellen Anwendung biologischer Pflanzenschutzmittel ist die fehlende Stabilität der Formulierung, die unter großtechnischen Bedingungen gesichert werden muss. Zudem ist der chemische Faktor, auf den die antagonistische Wirkung zurückzuführen ist, häufig nicht bekannt.

Biologische Formulierungen auf der Basis von sporenbildendem *Bacillus* eröffnen aufgrund ihrer langen Haltbarkeit Vorteile für den biologischen Pflanzenschutz (Haas & Defago 2005). Es ist bekannt, dass einige Vertreter dieses Genus, *B. cereus, B. subtilis, B. licheniformis, B. pumilus* und *B. amyloliquefaciens,* eine deutliche antagonistische Wirkung gegenüber phytopathogen Pilzen und Bakterien aufweisen und somit für die Entwicklung biologischer Pflanzenschutzmittel geeignet erscheinen (vgl. z.B. Handelsman et al. US 5,998,196, Bergstrom and da Luz US 0260293 A1, Heins et al. US 6,638,910, Neyra et al. WO 97/02749, Lehman et al. US 6,635,245, US 6,245,551).

*B. subtilis, B. amyloliquefaciens* und andere Vertreter dieser Bakteriengattung sind seit langem als natürliche Boden-Mikroorganismen bekannt, welche ein Spektrum antimikrobieller Metaboliten unter Laborbedingungen synthetisieren können (Krebs et al. 1998 DE 19641213 A1). Innerhalb dieser mit *B*. *subtilis* nahe verwandten Bakterien ist die Gruppe pflanzenassoziierter *B. amyloliquefaciens* aufgrund ihrer Fähigkeit zur Kolonisierung der Rhizosphäre und zur Kontrolle der pathogenen Mikroflora von besonderem Interesse (Reva et al. 2004). Zu den antimikrobiell wirkenden Stoffwechselprodukten von pflanzenassoziierten *B. amyloliquefaciens* gehören, neben Iturinverbindungen wie Bacillomycin D, auch die Polyketide Bacillaen, Diffizidin und/oder Oxydiffizidin sowie ein weiteres Polyketid mit schwacher antibakterieller Wirkung (Borriss et al. DE 10 2004 027 335.9), das kürzlich als Makrolaktin identifiziert werden konnte (Schneider et al. 2007). Einige Stämme der *Bacillus subtilislamyloliquefaciens* Gruppe synthetisieren weiterhin Bacilysin, welches von der Zelle in das umgebende Kulturmedium ausgeschieden wird. Neben Diffizidin ist auch Bacilysin für seine antimikrobielle Wirkung bekannt und bereits in WO 00/03009 von Steinborn und Hofemeister als Mittel zur Antibiose gegen mikrobielle Krankheits- und Fäulniserreger beschrieben worden. Es war bisher jedoch nicht bekannt, welche Verbindungen unter *in vivo* Bedingungen antagonistisch gegen den Erreger des Feuerbrandes und andere bakterielle Krankheitserreger wirksam sind. So sind unlängst zwei Produkte basierend auf *Bacillus subtilis* für die Feuerbrandbekämpfung in Europa registriert worden: Serenade®, basierend auf dem Stamm QST 713 und Biopro®, basierend auf Stamm BD 170 (Broggini et al. 2005). Bisher ist jedoch lediglich eine gemäßigte Effizienz dieser beiden, auf *Bacillus* basierenden Formulierungen in verschiedenen Feldversuchen in den USA und in Deutschland festgestellt worden (Aldwinckle et al. 2002, Laux et al. 2003). Die Resultate, die mit beiden Bioprodukten erhalten wurden, liegen allerdings ungleichmäßig variierend zwischen 71% und 0% Krankheitssuppression. Das aktive Wirkprinzip dieser Produkte ist nicht bekannt. Somit ist eine gezielte Weiterentwicklung für die Herstellung wirksamerer Produkte nicht möglich. Dies macht eine Weiterentwicklung auf diesem Gebiet dringend notwendig.

### (Einarbeitung des zitierten St.d.T. D1 bis D11)

WO 2005/116061 A offenbart DNA-Sequenzen aus Bacillus amyloliquefaciens FZB42, die für die Synthese von Polyketiden verantwortlich sind, sowie die Identifizierung von Synthesewegen für Polyketidantibiotika. Im Speziellen werden in drei Gencluster identifiziert und charakterisiert, die an der Synthese der Polyketide Bacillaen, Diffizidin/Oxydiffizidin und eines dritten zu dem Zeitpunkt noch unbekannten Polyketids mit schwachen antimikrobiellen Eigenschaften beteiligt sind. WO 00/03009 A offenbart Gene der *Bacillus subtilis* -Gruppe, die für die Biosynthese von Anticapsin und Bacilvsin verantwortlich sind.

JP 50 049497 A offenbart die Verwendung von Bacilvsin zur Vorbeugung einer *Lactobacillus* Kontamination von alkoholischen Getränken.

Zimmermann S B et al beschreiben in Journal of Antibiotics, Japan Antibiotics Research Association. Tokyo, Jp Bd. 40. Nr. 12, 1. Januar 1987 (1987-01-01). Seiten 1677-1681. XP003012623 die Entdeckung von Diffizidin und Oxydiffizidin aus *Bacillus subtilis* sowie deren antimikrobielle Eigenschaften *in vitro* gegen ausgesuchte Bakterien.

EP 0 128 505 A beschreibt die Präparation. Isolierung und Reinigung von Diffizidin aus der Kultivierung von *Bacillus subtilis.* Weiterhin ist die Eignung von Diffizidin als antibakterielle Substanz offenbart.

Chen Xiao Hua et al offenbaren in Nature Biotechnology, Nature Publishing Group, New York, NY, US, Bd. 25, Nr. 9, 1. September 2007 (2007-09-01), Seiten 1007-1014, XP002493384. ISSN: 1087-0156, dass durch die Besiedlung der Pflanzenwurzel mit *Bacillus amyloliquefaciens* FZB42 eine mögliche antibakterielle Wirkung gegen Phytopathogene erreicht werden kann.

Idris Elsorra E et al. beschreiben in Zeitschrift für Pflanzenkrankheiten die phytohormonartige und wachstumsfördernde Wirkung von Kulturfiltraten der Stämme *Bacillus amyloliauefaciens* FZB24, FZB42. FZB45 und *Bacillus subtilis.*

CN 1 952 116 A offenbart die Kultivierung und Verwendung von *Bacillus amyloliauefaciens l7* als antifungales Mittel.

CN 1 792 167 A offenbart die Kultivierung und Verwendung von *Bacillus amyloliquefaciens* zur Vorbeugung bzw. Elimination von bakteriell-bedingter Fäulnis in Kognak.

JP 10 146187 A und JP 11 246324 A beschreiben den hitzestabilen *Bacillus amyloliauefaciens* Stamm C3 und dessen fungizide Verwendung in Flüssigdüngemittel gegen Pilze.

### Ziel und Aufgabe der Erfindung

Die Erfindung hat das Ziel, ein umweltverträgliches, wirksames Mittel gegen Feuerbrand und andere Pflanzenkrankheiten auf der Grundlage definierter biologischer Faktoren zu entwickeln.

Aufgabe der Erfindung ist es, mittels effektiver Bacillus-Stämme und deren antagonistischem Wirkungssystem, ein natürliches, gesundheitlich unbedenkliches und dabei hocheffizientes Mittel zur Verwendung bei der Behandlung von bakteriellen Infektionen, insbesondere Feuerbrand auf Obstgehölzen, zur Verfügung zu stellen.

### Erfindungsbeschreibung

Die Aufgabe wird gemäß Anspruch 1 der Erfindung gelöst, die Unteransprüche sind Vorzugsvarianten.
Gegenstand der Erfindung ist demzufolge die Verwendung eines Mittels mit antibakteriellen Eigenschaften, bestehend aus Diffizidin und Bacilvsin und *Bacillus amyloliauefaciens* Stämmen die mindestens eine der beiden Substanzen Diffizidin und Bacilvsin produzieren, zur Behandlung von bakteriellen Infektionen bei Kulturpflanzen, wobei das Mittel auf die Oberfläche von Pflanzen aufgebracht wird. Vorzugsweise enthält das Mittel pflanzenassoziiertes *Bacillus amyloliauefaciens.* Insbesondere wird *Bacillus amyloliauefaciens* in Form seiner Sporen und/oder Teile aus seiner Flüssig - und/ oder Festkultur eingesetzt. Als Stämme werden der *Bacillus amyloliauefaciens* Stamm FZB42 und der *Bacillus amyloliquefaciens* Stamm FZB24 mit der ursprünglichen Hinterlegungsnummer DSM 10271 (dieser Stamm wird bei der Deutschen Sammlung von Mikroorganismen und Zellkulturen GmbH, Braunschweig jetzt unter der Hinterlegungsnummer DSM-ID 96-2 geführt) verwendet. Erfindungsgemäß wird vorzugsweise Feuerbrand bei Kulturpflanzen behandelt, besonders bevorzugt Feuerbrand bei Obstgehölzen, ganz besonders bevorzugt Feuerbrand bei Äpfeln. In einer Ausführungsvariante der Erfindung kann das Mittel mit antibakteriellen Eigenschaften auch zur Vorbeugung von Feuerbrand eingesetzt werden. Das Mittel kann auf die Pflanzen aufgesprüht, aufgetupft und/oder aufgestrichen werden. In einer anderen Ausführung kann es auf die Blüten aufgetragen werden.

Es wurde überraschend gefunden, dass Kombinationspräparate bestehend aus Sporen und Kulturlösungen von pflanzenassoziierten *Bacillus amyloliquefaciens* Stämmen, die die Sekundärmetaboliten Diffizidin und Bacilysin enthalten, eine starke antibakterielle Wirkung zeigen und zur Wachstumshemmung von *Erwinia amylovora* und anderen phytopathogenen Bakterien führen.
Das Kombinationspräparat ist als biologisches Pflanzenschutzmittel bei bakteriellen Erkrankungen von Kulturpflanzen insbesondere bei Befall von Obstgehölzen mit *Erwinia amylovora* (Feuerbrand) einsetzbar. Gegenüber bisherigen biologischen Pflanzenschutzmitteln weist das Kombinationspräparat die folgenden Vorteile auf:
1. Das Kombinationspräparat enthält mit den antibakteriellen Metaboliten Diffizidin und Bacilysin chemisch definierte Verbindungen mit hoher antagonistischer Wirksamkeit, die quantitativ bestimmbar ist. Die gemeinsame Anwendung von Diffizidin und Bacilysin im biologischen Pflanzenschutz wurde bisher noch nicht beschrieben.
2. Die Anwesenheit von langlebigen Bacillus-Endosporen garantiert eine konstante Produktqualität und gleichbleibende Anwendungserfolge, da die Sporen auch nach langer Lagerdauer auskeimen und ihren antagonistischen Effekt entfalten.
3. Die Formulierung kann direkt auf die Obstblüten aufgesprüht werden und ist unempfindlich gegenüber chemischen Fungiziden. Sie kann daher mit ihnen kombiniert eingesetzt werden.

Aufgrund der bekannten Instabilität von Bacillaen (Patel et al. 1995) und der vergleichsweise schwachen Aktivität von Makrolaktin wurde bisher angenommen, dass das Polyketid Diffizidin für die antagonistische Wirkung von *B*. *amyloliquefaciens* gegenüber pflanzenpathogenen Bakterien verantwortlich ist (Chen et al. 2006). Tatsächlich wurde bisher die Hemmung des Wachstums einer Vielzahl Gram-positiver und Gram-negativer Bakterien nachgewiesen - nicht aber von *Erwinia amylovora,* dem Erreger des Feuerbrands (Borriss et al. DE 10 2004 027 335.9). Überraschenderweise konnte unter geeigneten experimentellen Bedingungen erstmalig eine suppressorische Wirkung von Diffizidin auf *E. amylovora* nachgewiesen werden. Dagegen zeigten die im Kulturfiltrat von *B*. *amyloliquefaciens* FZB42 ebenfalls vorhandenen Polyketide Bacillaen und Makrolaktin keine oder nur geringe Wirkung.

Wirkungslos gegenüber *E*. *amylovora* erwiesen sich auch die Lipopeptide Surfactin, Bacillomycin D und Fengycin (siehe Ausführungsbeispiel 3).
Überraschenderweise konnte unter geeigneten experimentellen Bedingungen auch die antagonistische Wirkung von Bacilysin, einem seit langem bekanntem antibiotischen Wirkstoff, der aus den Aminosäuren L-Alanin und Anticapsin zusammengesetzt ist, auf *Erwinia amylovora* nachgewiesen werden. Eine optimale Bildung und antibiotische Wirksamkeit von Bacilysin wird durch Nutzung eines PA-Minimalmediums (Perry and Abraham, 1979) und Kultivierung bei 30°C erreicht (siehe Ausführungsbeispiel 4).
Die Bedeutung von Bacilysin für den durch *B*. *amyloliquefaciens* bewirkten Biokontrolleffekt wird in den der Erfindung zugrunde liegenden Arbeiten dargestellt:
1. Ein mutierter Stamm, welcher unfähig ist, Diffizidin zu produzieren (CH8 • *dfn*) hemmt das Wachstum von *E. amylovora* und die Ausbildung der Feuerbrandkrankheit in nahezu gleichem Maße wie der Wildtyp. Zusätzlich dazu unterdrückt eine *sfp* Mutante (CH3 • *sfp*), welche unfähig ist, nichtribosomale Lipopeptide zu synthetisieren, ebenfalls das Wachstum von *E. amylovora,* was darauf hinweist, dass neben der Wirkung der Polyketide ein anderes antagonistisches Prinzip für den hemmenden Effekt gegen Feuerbrand hervorgerufen durch FZB42 eine Rolle spielt (Siehe Ausführungsbeispiel 3).
2. Eine Doppelmutante (RS06 • *sfp • bac)* welche in der Polyketid- und in der Bacilysinsynthese gestört ist, war nicht in der Lage, das Wachstum von *E*. *amylovora* zu unterdrücken, was zu dem Schluss führt, dass der zusätzlich gefundene inhibitorische Effekt auf der Produktion von Bacilysin beruht, dessen Synthese nicht von Sfp abhängt (siehe Ausführungsbeispiel 4).
Auf der Grundlage dieser Untersuchungen wurde das erfindungsgemäße Mittel entwickelt. Dabei ist die kombinierte Wirkung von Diffizidin und Bacilysin in einem Präparat auf den Erreger des Feuerbrandes und andere phytopathogene Bakterien ein wichtiger erfindungsgemäßer Gedanke.

Kernpunkt der Erfindung ist daher die Verwendung von *Bacillus amyloliquefaciens* Stämmen mit einer erhöhten Synthese von Diffizidin und Bacilysin für die Bereitstellung von biologisch wirksamen Agenzien gegen Feuerbrand.
Realisiert wird die Erfindung durch ein Mittel gegen Feuerbrand bei Obstgehölzen, hervorgerufen durch *E. amylovora,* als Mischpräparat bestehend aus Sporen von *Bacillus amyloliquefaciens,* die auf den Obstblüten auskeimen, gemeinsam mit der Kulturlösung des Bakteriums, das die beiden wirksamen Metabolite Diffizidin und Bacilysin enthält.
Wesentlich ist, dass durch die Verwendung von Bakteriensporen eine Langzeitwirkung, die einerseits in der enormen Haltbarkeit und andererseits in dem unterschiedlichen Auskeimen der Sporen begründet ist, erzielt werden kann.

Die Sporen findet man zu großen Teilen in der Kulturlösung von *Bacillus amyloliquefaciens,* was eine einfache und kostengünstige Produktion des erfindungsgemäßen Mittels erlaubt.

Zur Produktion von antibakteriellen Sekundärmetaboliten, namentlich der Polyketide Bacillaen, Diffizidin und Macrolaktin, zur Bekämpfung des Feuerbrand-Erregers *Erwinia amylovora* hat sich der *Bacillus amyloliquefaciens* Stamm FZB42 als besonders effektiv erwiesen. Das Verfahren zur Produktion dieser in Kulturlösung enthaltenen Polyketide in verschiedenen Größen von Labor- und Pilotfermentern wird im Ausführungsbeispiel 5 näher beschrieben. Das erfindungsgemäße Mittel ist durch seine Herstellung mittels Fermentation von Bakterien überaus kostengünstig und zeichnet sich durch eine gute Umweltverträglichkeit sowie eine lange Haltbarkeit aus. Auf die Verwendung toxischer Chemikalien wird sowohl im Herstellungsprozess als auch bei der Anwendung zur Bekämpfung des Feuerbrandes vollständig verzichtet.
Zudem ist das Mittel vergleichbar effektiv wie die Verwendung des nicht erwünschten Antibiotikums Streptomycin. Erste Feldversuche bei Apfelbäumen auf verschiedenen Versuchsflächen zeigten eine stabile Eindämmung des Feuerbrandbefalls (Ausführungsbeispiel 6).
Damit ist ein Mittel bereitgestellt, das Feuerbrand wirksam bekämpfen und die Verbreitung von E. amylovora und anderer phytopathogener Bakterien stoppen kann. Der bisherige Aufwand der Obstbauern zur Bekämpfung der Krankheit und der Verhinderung von Neuinfektionen, wie das Roden und Verbrennen infizierter Gehölze, entfällt.

### Ausführungsbeispiele

Die hier aufgeführten Ausführungsbeispiele sollen die o.g. Erfindung weiter beschreiben, aber nicht zur Eingrenzung auf die nachstehend genannten Anwendungsmöglichkeiten dienen.

### 1. Auswahl von Bakterienstämmen mit suppressiver Wirkung gegen Feuerbrand

Ursprünglich wurden 116 Bakterienstämme in kompetitiver Mischkultur mit *E*. *amylovora* Ea385 auf ihre suppressive Wirkung geprüft. Die Mischkultur wurde in folgender Weise durchgeführt: *Bacillus*-Stämme wurden über Nacht in Glukose-Nährbouillon(NBS, Sifin Berlin) bei 27° C angezogen. Ea385 wurde über 48h auf 2% NBS-Agar kultiviert. Vor Beimpfung der Mischkultur, Ea385 wurde auf eine Konzentration von 1x10⁷ Zellen/ml verdünnt. Der eingesetzte Bacillus-Stamm wurde auf eine Konzentration von 5 x 10⁷ Zellen/ml eingestellt. Nach 24 h Wachstum bei 20° oder 27°C, wurde die Konzentration von Ea385 in der Mischkultur durch Lebend-Keimzahlbestimmung mittels serieller Verdünnung auf selektiven McConkey-Platten (erlaubt nur Wachstum von *Erwinia* nicht von *Bacillus*) ermittelt. Die erhaltenen Ergebnisse wurden als % Hemmung im Vergleich zur ursprünglichen Keimzahl kalkuliert. Als Vergleich wurden QST713 (aktiver Bestandteil des Biokontroll-Produkts "Serenade" der Firma AgraQuest) und FZB42 ebenfalls überprüft. Die Effizienz der überprüften Stämme ist bei 27° höher als bei 20° C Inkubationstemperatur. Aussagekräftiger sind jedoch die Ergebnisse bei 20°C, da diese dem "normalen" mitteleuropäischem Klima während der Apfelblüte besser entsprechen. Ca 20 Stämme einschließlich QST713 und FZB42 wurden für den *in vivo* Apfelblütentest ausgewählt, da sie auch bei 20°C eine 100%ige Hemmwirkung auf *E*. *amylovora* ausübten (Tabelle 1).

Ein Testsystem mit abgetrennten Apfelblüten (Pusey 19977) wurde für die Bestimmung der antagonistischen Wirkung in vivo herangezogen. Zweige der Apfelsorte "Gala" wurden bei 2°C von Januar bis August gelagert. Jede Woche wurde eine Gruppe von Zweigen in das Gewächshaus gebracht, um die Blüte zu induzieren. Die Blüten wurden abgeschnitten und mit den Blütenstielen in 10%iger Saccharoselösung gelagert (23°C, 100% rH). Die Blüten wurden mit einer wässrigen Suspension von Ea385 (10⁶ cfu/ml) bis zur Sättigung besprüht. Die Test-Präparationen der Bacillus-Stämme wurden nach 1 h auf die Blüten gesprüht. Die Anzahl der Blüten mit Feuerbrandsymptomen wurde 6 Tage nach der Inokulation bestimmt. Die Experimente wurden drei- bis viermal wiederholt, wenn nicht anderweitig angegeben. An den abgeschnittenen Apfelblüten wiesen 6 Stämme aus der Gruppe pflanzen-assoziierter *B*. *amyloliquefaciens* (FZB 45, FZB42, FZB13, FDK33, FDK21 and KF60) eine höhere Wirkung als QST713 bzw, als das kommerzielle Produkt "Serenade" (AgraQuest) auf, das in der empfohlenen Verdünnung eingesetzt wurde (Tabelle 1).

### 2. Analyse des Polyketidspektrums ausgewählter Bacillus-Stämme mit suppressiver Wirkung gegen Feuerbrand

Die Polyketidbildung ausgewählter Bacillus-Stämme wurde durch "high pressure liquid chromatography" (HPLC) mit der HPLC 1200 Anlage der Firma Agilent, Waldbronn, (Deutschland) bestimmt. 10 • l Probe wurde auf eine HPLC-Säule (ZoRBX Eclipse XDB-C18, 4.6 x 150 mm, 5 µm, Agilent) injiziert. Während des Versuchs wurde die Temperatur konstant auf 30° C gehalten. Der Lauf wurde mit einer Flussrate von 1,5 ml/min. und einem Lösungsmittelgradienten A (0.1%, V/V HCOOH) und B (CH₃CN), der nach 10 min. 100% erreichte, durchgeführt. Die Konzentration von 100% CH₃CN - HCOOH wurde für weitere zwei Minuten gehalten. Die Säule wurde mit 5% CH₃CN - HCOOH für 3 min. äquilibriert. Alle Polyketide wurden als distinkte Peaks bei 280 nm detektiert. Durch den Einsatz von Mutantenstämmen mit defekter Produktion aller oder einzelner Polyketide und dem Abgleich mit den spezifischen UV-Spektren dieser Verbindungen wurde eine Zuordnung der Peaks zu distinkten Polyketiden (Bacillaen, Makrolaktin und Diffizidin) ermöglicht. Die Herstellung und Charakterisierung dieser Mutantenstämme ist im nachfolgenden Anwendungsbeispiel beschrieben. Die Berechnung der Polyketidproduktion wurde mit der Auto Integrate Software der Firma Agilent durchgeführt.

Die Analyse ergab, dass nahezu alle Stämme, die sich im Blütentest und der kompetitiven Mischkultur als besonders effizient gegen *E. amylovora* erwiesen hatten, das vollständige Spektrum aller drei Polyketide produzierten. Das ist eine Eigenschaft, die nur bei der Gruppe pflanzenassoziierter B. amyloliquefaciens vorhanden ist. Bei den Stämmen FZB42 und QST713 ist Diffizidin das Polyketid, das in höchster Konzentration vorkommt (Tabelle 2). Eine Ausnahme innerhalb dieser Gruppe gegenüber *E. amylovora* besonders wirkungsvoller antagonistischer Stämme stellen B. mojavensis MB2 und B. subtilis INR937 dar, die nur den Sekundärmetaboliten Bacillaen, nicht aber Diffizidin zu produzieren vermögen. Die höchste antagonistische Wirkung bei der Anwendung 1 %iger Kulturbrühen weisen jedoch *B*. *amyloliquefaciens* FZB24, FDK21 und FZB42 auf (Tabelle 2)

### 3. Konstruktion und Charakterisierung von Mutanten mit eingeschränkter Syntheseaktivität

Das "aktive Prinzip" für die suppressive Wirkung pflanzenassoziierter *B*. *amyloliquefaciens* wurde durch eine Kombination genetischer und chemischer Untersuchungen identifiziert. Alle Mutanten sind vom Wildstamm *B*. *amyloliquefaciens* FZB42 abgeleitet. FZB42 bildet die folgenden antimikrobiellen Sekundärmetaboliten: Lipopeptide Surfaktin, Bacillomycin D und Fengycin, Polyketide Bacillaen, Makrolaktin und Diffizidin sowie das Dipeptid Bacilysin (Chen et al. 2007). Die Konstruktion der Mutanten CH3, CH8, CH14 des Stammes *B*. *amyloliquefaciens* FZB42 wurde bereits beschrieben (Chen et al. 2006). CH3 (• *sfp::ermAM*) ist unfähig zur Bildung der Lipopeptide Bacillomycin D, Surfactin und Fengycin und der Polyketide Bacillaen, Makrolaktin und Diffizidin, bildet jedoch Bacilysin. CH8 *(*• *pks3KS1::ermAM*) ist unfähig zur Bildung von Diffizidin. CH14 *(*• *pks1KS1::cat* • *pks2KS1::neo*) bildet kein Bacillaen und kein Makrolaktin. Die Bacilysin-Defekt-Mutanten RS01 (• *bacA::cm*) und RS06 (• *bacA::cm* • *sfp::ermAM)* werden in folgender Weise erhalten: Ein Teil des bacA Genes wird mit dem Primer-Paar bclFW 5'...ACAGAAGAGGAAAACGGACGGC und bclRV 5'...ACGTCCAATCCGCCGAACTTG amplifiziert. Das PCR Fragment wird in den Vektor pGEM-T ligiert. Das resultierende Plasmid ist pBac12. Das *bacA* Gen wird durch eine Cm^{R}-Kassette ersetzt und das Plasmid pRS01 erhalten. Das linearisierte pRS01 wird durch homologe Rekombination in das Genom von kompetenten FZB42-Zellen integriert. In der resultierenden Mutante RS01 ist das *bacA* Gen durch die eingeführte Cm^{R}-Kassette zerstört. RS01 ist unfähig zur Bildung von Bacilysin. Die Doppelmutante RS06 wird durch Transformation von CH3 mit chromosomaler DNA aus RS01 erhalten. Die resultierende Mutante bildet weder Polyketide und Lipopeptide noch Bacilysin.

Die Fähigkeit von FZB42 und seinen Mutantenstämmen zur Bildung von Sekundärmetaboliten, die das Wachstum von *E. amylovora* unterdrücken, wird durch Agar-Diffusionstest, Bioautographie und HPLC (Chen et al. 2006) in folgender Weise überprüft: Die Zellen der Indikatorstämme *Bacillus megaterium* und *Erwinia amylovora* werden in der späten logarithmischen Wachstumsphase (OD₆₀₀ₙₘ: 1,0) geerntet und 1:40 in 1% Luria broth (LB)-Agar verdünnt. Zur Herstellung der Proben für HPLC und Bioautographie werden die Bacilllus-Stämme in Landy-Medium (Medium L, Landy 1948) oder einem anderen für die Sekundärmetabolitenproduktion geeigneten Medium unter Schütteln (165 rpm) bei 30° C kultiviert und nach 40 h 7 ml der Kultur für 20 min. bei 11 000 rpm zentrifugiert. Der Überstand wird auf einer Amberlite-XAD16 Säule (6g) gereinigt. Die Proben werden in einem Rotationsverdampfer getrocknet und in 0,55 ml Methanol, das 10% dest. Wasser enthält, aufgenommen. Für die Bioautographie werden 10 • l der Probe bei Einsatz von *B. megaterium* als Indikorstamm und 30 • l bei Einsatz von *E*. *amylovora* als Indikatorstamm genutzt. Im Falle des Agar-Diffusionstestes werden doppelte Mengen eingesetzt.

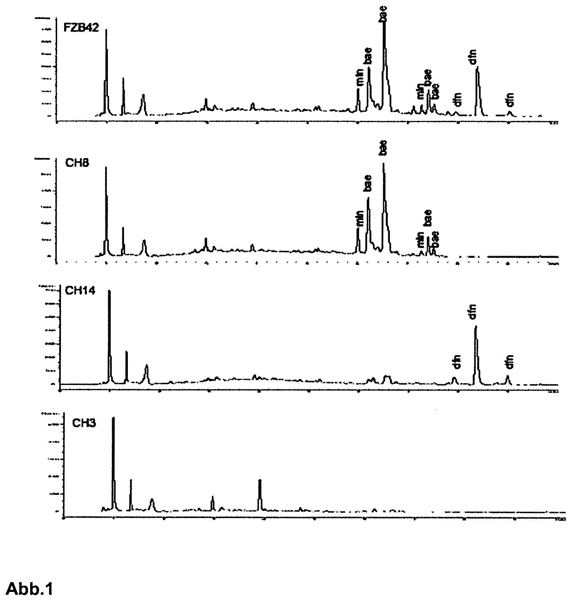

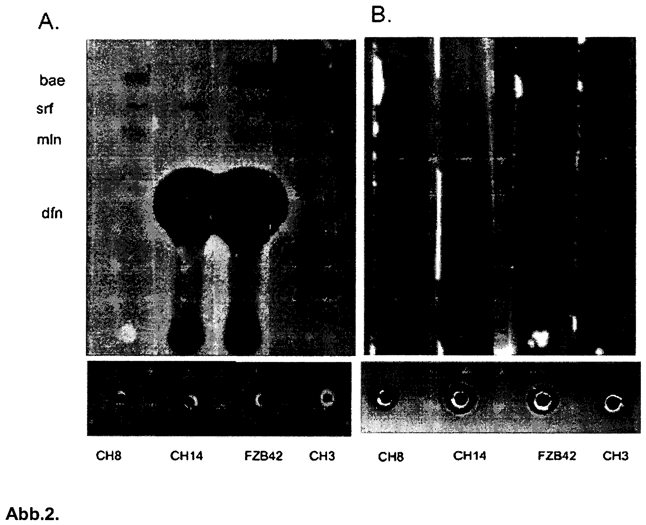

In der Abbildung 1 sind die Ergebnisse der HPLC-Analyse für die Metabolitenkonzentration von FZB42, CH3, CH8 und CH14 dargestellt, die zeigen, dass durch FZB42 die Polyketide Bacillaen, Makrolaktin und Diffizidin gebildet werden. Der Mutantenstamm CH8 ist nicht zur Bildung von Diffizidin, der Mutantenstamm CH14 nicht zur Bildung von Bacillaen und Makrolaktin fähig. CH3 bildet keine der drei angegebenen Polyketide. Diese Ergebnisse werden durch die Bioautographie (Abb. 2) bestätigt. Abb. 2A zeigt, dass durch die Difficinproduzenten FZB42 und CH14 eine deutliche Hemmung des Indikatorstammes B. megaterium erfolgt. Dagegen ist der Effekt von Bacillaen, ausgeübt durch FZB42 und CH8, gering. Ähnliche Ergebnisse werden erhalten, wenn *E*. *amylovora* als Indikatorstamm eingesetzt wird (Abb. 2B). Diffizidin hemmt wirksam das Wachstum des Feuerbranderregers, während Bacillaen und Surfactin nur eine sehr geringe Wirksamkeit aufweist. Aus diesen Untersuchungen ergibt sich, dass das Polyketid Diffizidin das Wachstum von *E. amylovora* wirksam zu hemmen vermag. Im Bioautographietest übt Stamm CH3 (Abwesenheit der Lipopeptid- und Polyketidproduktion) keine wirksame Hemmung auf *E. amylovora* aus.

Ein anderes Bild wird jedoch im Agar-Diffusionstest erhalten. Bei diesem Test erfolgt im Gegensatz zur Bioautographie keine chemische Trennung der im Kulturfiltrat enthaltenen Metaboliten. Somit stellt die erhaltene Hemmzone, die Summe aller in dem Kulturfiltrat enthaltenen Metaboliten dar. Bei Einsatz von *B. megaterium* als Indikatorstamm verursachen die beiden Diffizidin-produzierenden Stämme FZB42 und CH14 erwartungsgemäß die größten Hemmzonen (Abb. 2A).

Überraschenderweise erweisen sich bei Einsatz von *E*. *amylovora* als Indikatorstamm auch die Kulturfiltrate der Mutantenstämme CH8 und CH3, obwohl sie kein Diffizidin bilden, als wachstumshemmend (Abb. 2B). Diese Wachstumshemmung kann nicht auf die Anwesenheit anderer Polyketide und Lipopeptide zurückgeführt werden, da der Stamm CH3 ja über keine Synthesemöglichkeit für diese Verbindungen verfügt. Die Identifizierung dieser gegenüber *E*. *amylovora* antagonistischen Verbindung als Bacilysin wird in dem nachfolgenden Ausführungsbeispiel 4 dargestellt.

### 4. Diffizidin und Bacilysin sind für die Suppression von Feuerbrand verantwortlich

Zur Bestimmung der Rolle von Diffizidin und der anderen Polyketide bei der antagonistischen Wirkung von FZB42 wird die Wirkung der Mutanten mit der des FZB42 Wildtyps im Blütentest verglichen (Tabelle 3). Der suppressive Effekt von CH14 auf *E. amylovora* war mit dem des Wildtyps vergleichbar. Da dieser Stamm kein anderes Polyketid als Diffizidin bildet, bestätigt dieser Versuch, dass die suppressive Wirkung von FZB42 auf Diffizidin zurückgeführt werden kann.

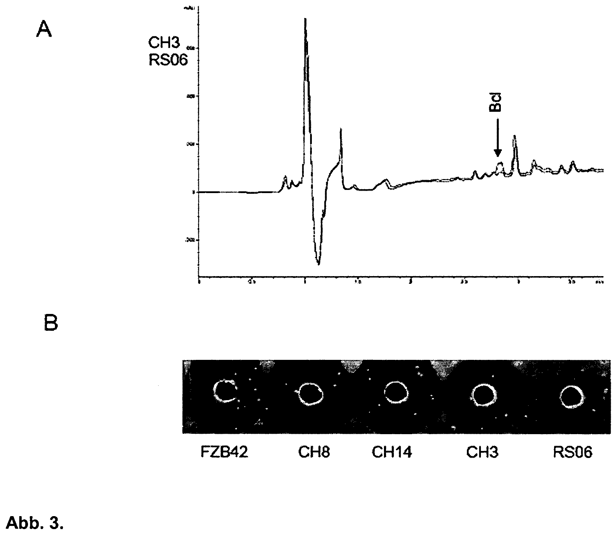

Überraschenderweise ist jedoch die Wirkung von Stamm CH8 bei dem die Fähigkeit zur Diffizidinbildung eliminiert worden ist nur geringfügig reduziert. Eine Bestätigung für den Befund (siehe Ausführungsbeispiel 3), dass neben Diffizidin ein weiterer Metabolit an der suppressiven Wirkung gegen *E. amylovora* beteiligt ist.
Es werden die Stämme FZB42, CH8, CH14, CH3 und RS06 in einem glutamat-freien Medium "GA", das für die Produktion von Bacilysin optimiert wird, kultiviert. Ein Liter GA-medium besteht aus K2HPO4, 7 g, KH2PO4, 2 g, MgSO4 • 7 H2O, 0.1 g, (NH4)SO4, 1 g, yeast extract, 0,05g, Fe(SO4)3 • 6 H2O, 0.15 mg, MnSO4 • H2O, 5mg, CuSO4 • 5 H2O, 0.16 mg and sucrose, 13 g. Die Kulturen werden bei 165 rpm bei 29°C kultiviert.
Ein Agar-Diffusionstest, der mit den Überständen der Kulturen von FZB42, CH8 und CH14 durchgeführt wird, ergibt starke Hemmzonen für den Indikatorstamm E.a.385 (Abb. 3). Eine deutliche Hemmzone ist auch bei dem Stamm CH3 *(*• sfp) sichtbar, ein Zeichen, dass an der antagonistischen Wirkung von FZB42 auch eine Verbindung beteiligt ist, die nicht den Polyketiden oder Lipopeptiden angehört. Die Doppelmutante RS06 *(*• *sfp,* • *bac*) ist nicht zur Bildung von Polyketiden, Lipopeptiden oder Bacilysin fähig. RS06 verursacht keine Hemmung von *E*. *amylovora.* Damit wird die Bedeutung von Bacilysin für den durch *B*. *amyloliquefaciens* ausgeübten antagonistischen Effekt auf den Feuerbranderreger nachgewiesen. Eine Optimierung der Wirksamkeit von *Bacillus amyloliquefaciens* Formulierungen gegen Feuerbrand und andere bakterielle Erkrankungen von Kulturpflanzen erfolgt auf der Basis der erhöhten Produktion von Diffizidin und Bacilysin.

### 5. Herstellung des Kombinationspräparates

Als Arbeitskultur dient eine Sporenkonserve eines *Bacillus amyloliquefaciens-*Stammes, die bei -20°C gelagert wird. Die erste Vorkultur wird in Glucose-Nährbouillon (Sifin, Berlin) im Schüttelkolben mit Schikanen kultiviert. Diese Vorkultur wird bei 30°C und einer Schüttelfrequenz von 200 rpm bis zu einer Zelldichte von mindestens 5·10⁸ Zellen/mL inkubiert. Eine zweite Vorkultur (Glucose-Nährbouillon Sifin, Berlin) wird mit einem Inokulum der ersten Vorkultur beimpft, so dass sich eine Anfangszellzahl 1·10⁷ Zellen/mL ergibt. Die zweite Vorkultur wird in einem Pilotfermenter mit einem sechzigstel Volumen der Hauptkultur durchgeführt. Es wird bei 30°C inkubiert. Die Sauerstoffversorgung wird durch Belüftung mit gefilterter Raumluft mit einem Volumenverhältnis von circa 0,34 vvm gewährleistet. Zur Dispergierung des Luftstroms werden Sechsblattscheibenrührer eingesetzt. Die Kultivierungsdauer entspricht der ersten Vorkultur, so dass die Hauptkultur ebenfalls mit einer Zelldichte von circa 1·10⁷ Zellen/mL beimpft wird.

Als Produktionsmedium der Hauptkultur kommt z. B. Landy-Medium ("Medium PM", Landy et al., 1948) zum Einsatz. Mit diesem Medium wird insbesondere eine hohe Konzentration von Diffizidin erreicht. Die Sauerstoffversorgung wird durch die Belüftung mit gefilterter Luft mit einem Volumenverhältnis von 0,23 vvm sichergestellt. Es werden ebenfalls Sechsblattscheibenrührer verwendet. Die Fermentationsdauer der Hauptkultur und damit die Produktion der Metabolite beträgt ca. 72 Stunden. Eine höhere Zelldichte und damit verbundener erhöhter Sauerstoffverbrauch macht eine Drehzahlregelung des Rührers notwendig. Für die Induzierung der Metabolitenproduktion wird bei einer Sauerstofflimitierung von unter 10% Sättigung gearbeitet. Um die Schaumbildung während der Fermentation zu minimieren, wird durch einen Regelmechanismus eine automatische Zufuhr von sterilem Antischaummittel gewährleistet. Eine pH-Statierung ist nicht notwendig. Alle Behälter, Messgeräte und Nähmedien werden zuvor durch geeignete Verfahren sterilisiert und autoklaviert.

Die mit den gewünschten Sekundärmetaboliten angereicherte Kulturlösung wird in gereinigte Behälter überführt und in geeigneter Weise konserviert, um eine lange Haltbarkeit des Produkts zu erreichen.

### 6. Anwendungsversuche: Einfluss verschiedener Formulierungen auf die Wirksamkeit des Präparats

Versuche zur Wirksamkeit von Kulturlösungen des Stammes FZB42 aus verschiedenen Herstellungsmethoden und verfahrenstechnischen Varianten wurden u.a. an abgeschnittenen Apfelblüten in einer Klimakammer bei konstanten Versuchsbedingungen von 20-23°C und 100% Luftfeuchte durchgeführt (BioProtect GmbH). Die Blüten stehen in Zuckerlösung und werden mit den Versuchsmittel eingesprüht. Eine Stunde vor der Anwendung erfolgt die Inokulation mit *Erwinia amylovora* Ea385 in einer Konzentration von 1 x 10⁶ cfu/ml. Die Bonitur des Befalls der Blüten durch *E*. *amylovora* erfolgt nach 6 Tagen.
Aus der Wirkung in der Testvariante im Vergleich zur unbehandelten Kontrolle errechnet sich der Wirkungsgrad des Prüfmittels.
Tabelle 4 verdeutlicht die Wirkung eines Versuches zum Vergleich von Sporen, Überstand und Kulturlösung produziert in typischem Sporenproduktionsmedium im Vergleich zu einer Kulturlösung produziert in einem Medium zur Produktion von Polyketiden (PM) nach Anwendungsbeispiel 5.

Der Versuch zeigt, dass der Einsatz einer Kulturlösung mit FZB42 im Standardmedium für Sporenproduktion zu einer geringen Reduktion des Befalls von Apfelblüten mit Feuerbrand führt. Sporensuspensionen allein haben kaum und Überstände aus dieser Fermentation keinen Effekt gegen den Feuerbranderreger. Als sehr wirksam an abgetrennten Apfelblüten erweist sich nur der Einsatz spezifisch für die Metabolitenproduktion optimierter Nährlösungen (PM) bei der Fermentation von FZB42. Bei einer Konzentration von 1 x 10⁸ cfu/ml wird eine 95%ige Reduktion des Feuerbrandbefalls erreicht.

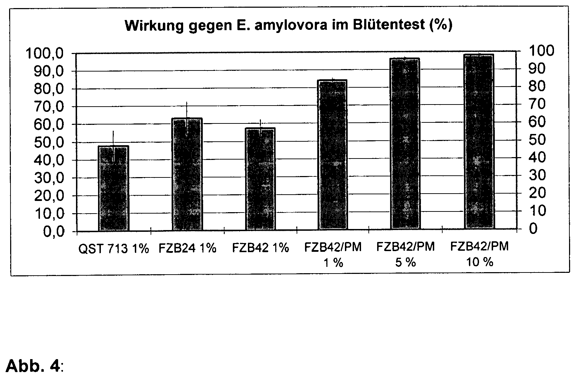

Ein weiterer Versuch unter den o.g. Versuchsbedingungen bei abgeschnittenen Blüten verdeutlicht die Wirkung gegen *Erwinia amylovora* von verschiedenen *Bacillus* - Stämmen unter Einsatz einer 1%-igen Kulturlösung zur Verwendung des Sporulationsmediums im Gegensatz zur Verwendung der verfahrenstypischen Kulturlösung für die Produktion von Polyketiden mit 1, 5 und 10% (Abb. 4).

Der Einsatz der Stämme QST 713 (AgraQuest), FZB24 und FZB42 (ABiTEP GmbH) als 1 %-ige Kulturlösung des Sporulationsmediums zeigt eine Hemmung des Feuerbranderregers *Erwinia amylovora* zwischen 50 und 60 %.
Erst durch die Verwendung des auf die Bildung von Polyketiden optimierten Kulturmediums und der beschriebenen Kultivierungsbedingungen werden ausreichende Mengen an Diffizidin und Bacilysin gebildet, um bei Anwendung einer 1 %-igen Kulturlösung bereits ca. 85 % Wirkungsgrad zu erreichen. Der Einsatz von 5 bzw. 10%-iger Kulturlösung des Mediums PM erreicht dann Wirkungsgrade von über 95%.

Auf der Grundlage der Ergebnisse von Versuchen an abgetrennten Blüten im Labor wird für die Feldversuche die Kulturlösung PM (hergestellt nach Anwendungsbeispiel 5) ausgewählt, nach dem beschriebenen Verfahren in größeren Mengen hergestellt und an zwei Standorten eingesetzt:
1) Julius-Kühn-Institut (JKI), Institut für biologischen Pflanzenschutz Darmstadt, Apfelsorte Idared
2) Landratsamt Karlsruhe, Standort Kirschgartshausen, Apfelsorte Gala Royal

Die Versuche wurden nach EPPO-Richtlinie PP 1/166(3) in einer randomisierten Blockanlage mit 4 Wiederholungen durchgeführt. Die Applikation der Versuchsmittel erfolgte mit einem Hochleistungssprühgerät mit einer 0,3 mm Düse bei ca. 10 % geöffneten Blüten. Für die Inokulation der Blüten wurde am 26.04.2008 eine Mischung von 3 *Erwinia amylovora* - Stämmen in einer Konzentration von 2x10⁷ Zellen/ml verwendet. Die Versuchsmittel wurden 2 Stunden vor der Inokulation und dann nach Warndienst 3-4 x ausgebracht.
Der erste Feuerbrandversuch beim JKI ergab bei den Bonituren Ende Mai einen Befallsgrad von 55 % in der unbehandelten Kontrolle und für das Präparat Kulturlösung M eine signifikante Wirksamkeit von 66% bei direkter Blüten-Inokulation und Anwendung einer 5%igen Kulturlösung M.

Im zweiten, vom Landratsamt Karlsruhe im Versuchsfeld Kirschgartshausen durchgeführten Test wurde bei Bonitur Mitte Mai ein Feuerbrand-Befall in der unbehandelten Kontrolle von 6,4 % ermittelt. Der Wirkungsgrad des Antibiotikums Streptomycin bei "sekundärer" (indirekter) Infektion der Blüten lag bei 87%, während die Anwendung von Kulturlösung M eine Wirkung von 66,8 % erreichen konnte.

**Tabelle 1. Wirkung ausgewählter Bacillus-Stämme bei der Suppression von E. amylovora in Mischkultur und im Blütentest. Mischkulturen bestehend aus E. amylovora und dem Teststamm wurden bei 20° C bzw. bei 27°C inkubiert. Auf die Blüten wurde entweder unverdünnte (100%) oder Wasser-verdünnte Bakterien-Kulturlösung (20%) gesprüht.**

| Stamm | Mischkultur | | Blütentest | | Art | Quelle |
|---|---|---|---|---|---|---|
| | 20°C | 27°C | 100% | 20% | | |
| FZB 45 | 100 | 100 | 98 | | *B. amyloliquefaciens* | ABiTEP GmbH |
| FZB 42 | 100 | 100 | 98 | 42 | *B. amyloliquefaciens* | ABiTEP GmbH |
| FZB 13 | 100 | 100 | 96 | 95^{a} | *B.amyloliquefaciens* | ABiTEP GmbH |
| FDK 33 | 100 | 100 | 96 | 95^{a} | *B. amyloliquefaciens* | University of Konstanz |
| FDK 21 | 98 | 100 | 96 | 83^{a} | *B. amyloliquefaciens* | University of Konstanz |
| KF 60 | 99 | 99 | 87 | 83^{a} | *B. amyloliquefaciens* | University of Konstanz |
| QST713 | 100 | 100 | 76 | n.d. | *B. amyloliquefaciens* | Serenade WPO (Agraquest) |
| FZB 108 | 100 | 100 | 66 | n.d. | *B. subtilis* | ABiTEP GmbH |
| MB 2 | 100 | 100 | n.d. | 58 | *Bacillus mojavensis* | Leiden University |
| FZB 24 | 100 | 100 | 65 | 47^{a} | *B. amyloliquefaciens* | ABiTEP GmbH |
| FZB 109 | 99 | 100 | 57 | n.d. | *B. amyloliquefaciens* | ABiTEP GmbH |
| FDK 24 | 100 | 100 | 39 | n.d. | *B. velezensis* | University of Konstanz |
| BS 19 | 100 | 100 | n.d. | 22 | *Bacillus spp.* | Leiden University |
| MB 8 | 100 | 100 | n.d. | 21 | *Bacillus spp.* | Leiden University |
| MB 33 | 100 | 99 | n.d. | 13 | *Bacillus spp.* | Leiden University |
| MB 31 | 100 | 100 | n.d. | 11 | *Bacillus spp.* | Leiden University |
| MB 23 | 100 | 100 | n.d. | 10 | *Bacillus spp.* | Leiden University |
| MB 27 | 100 | 100 | n.d. | 6 | *Bacillus spp.* | Leiden University |
| BS 18 | 100 | 100 | n.d. | 3 | *Bacillus spp.* | Leiden University |
| MB 25 | 100 | 100 | n.d. | 1 | *Bacillus spp.* | Leiden University |

| | | | | | | |
|---|---|---|---|---|---|---|
| ^{a} Das Experiment wurde nur einmal durchgeführt. | | | | | | |

**Tabelle 2. Polyketidspektrum und Wirksamkeit gegen E: amylovora von ausgesuchten Bacillus-Stämmen in kompetitiver Mischkultur (1) und im Blütentest (2). Prominente Polyketid-Peaks, die nach HPLC-Trennung erhalten wurden, sind hervorgehoben. Für den Blütentest wurden die Stämme in einem optimierten Landy-Medium angezogen. Wasser-verdünnte Kulturbrühen (1%) wurden direkt auf die abgeschnittenen Apfelblüten gesprüht. Die Zahlen in Klammern geben die Anzahl der Versuchswiederholungen im Blütentest an.**

| Strain | bacillaene | macrolactin | Diffizidin | Efficiency [%] in mixed cultures | Efficiency [%] on detached blossoms |
|---|---|---|---|---|---|
| *B. amyloliquefaciens* FZB 24 | **6.31 (1249),** 6.47 (388), 6.63 (707), 678 (535), 6.84 (203) | 6.02 (570), 7.27 (157) | **8.37 (1367),** 9.01 (105), 10.81 (188) | 100 ± 0 | 62 ± 3 (2) |
| *B. amyloliquefaciens* FDK 21 | 6.47 (65), 6.55 (251), 6.62 (99), 6.705 (50), 6.78 (153) | 6.01 (377), 7.27 (115) | 6.55 (251), 6.78 (153) 8.43 (81) | 100 ± 0 | 55 ± 5 (2) |
| *B. amyloliquefaciens* FZB 42 | 6.47 (693), **6.78** (**1038**) | 7.02 (230), 7.1 (175), 7.26 (359) | 7.79 (146), **8.38** (**1783**), 8.82 (118), 9.03 (128) | 100 ± 0 | 50 ± 13 (4) |
| *B. subtilis subtilis* INR 937 | **6.58** (**9639**), 6.65 (1440), **6.80 (2808),** 7.67 (119) | 7.02 (234) | - | 100 ± 0 | 39 ± 1 (2) |
| *B. amyloliquefaciens* Gao B85 | **6.31 (1302),** 6.38 (237), 6.46 (276), 6.51 (453) | **5.7 (1685)**, 5.82 (175), 5.93 (61), 6.01 ?(481), 7.1 (178) | 8.39 (522), 8.79? (60), 9.02? (54) | 100 ± 0 | 28 ± 22 (3) |
| *B. amyloliquefaciens* QST713 | 6.47 (460) | 6.01 (498), 7.26 (530) | 8.38 (**1807**), 8.82 (120), 9.04 (116), 10.84 (290), 10.93 (200) | 100 ± 0 | 23 ± 4 (2) |
| *B. mojavensis* MB 2 | **6.8 (1192),** 6.63 (661), 6.56 (344), 6.47 (189) | - | - | 100 ± 0 | 22 ± 14 (3) |
| *B. amyloliquefaciens* GB 03 | 6.31 (509), 6.39? (44) | 5.72 (366), 6.0? (252) | 8,42 (128), 8.8? (10), 9.03 ?(6) | 100 ± 0 | 15 ± 7 (2) |
| *B. amyloliquefaciens* GaoB3 | 6.77 (140) | 6.01 (258) | 8.4 (249), 8.8 (46), 9.02(18) | 100 ± 0 | 7 ± 2 (2) |
| *B. amyloliquefaciens* FZB 111 | 6.31 (448) | 5.72 (213), 6.0 (228), 6.2 (58) | 8.42 (94) | 100 ± 0 | 3 ± 11 (2) |
| *B. amyloliquefaciens* FZB 113 | -? | 6.19? (110), 7.1 (77) | 8.42 (18) | 100 ± 0 | 0 ± 4 (2) |

**Tabelle 3. Wirkung von B. amyloliquefaciens FZB42 und den Mutantenstämmen CH8 und CH14 auf abgeschnittene Apfelblüten infiziert mit E. amylovora**

| Stamm | Genotyp | Synthese von Polyketiden | | | Wirkung [%] auf abgeschnittene Blüten |
|---|---|---|---|---|---|
| | | Bacillaen | Macrolactin | Diffizidin | |
| FZB 42 | Wild-Typ | Yes | yes | yes | 84 ± 7 (3) |
| CH8 | • *dfn::ermAM* | Yes | yes | no | 79 ± 5 (3) |
| CH14 | • *bae::cat* | No | No | yes | 89 ± 12 (3) |
| | • *mln::neo* | | | | |

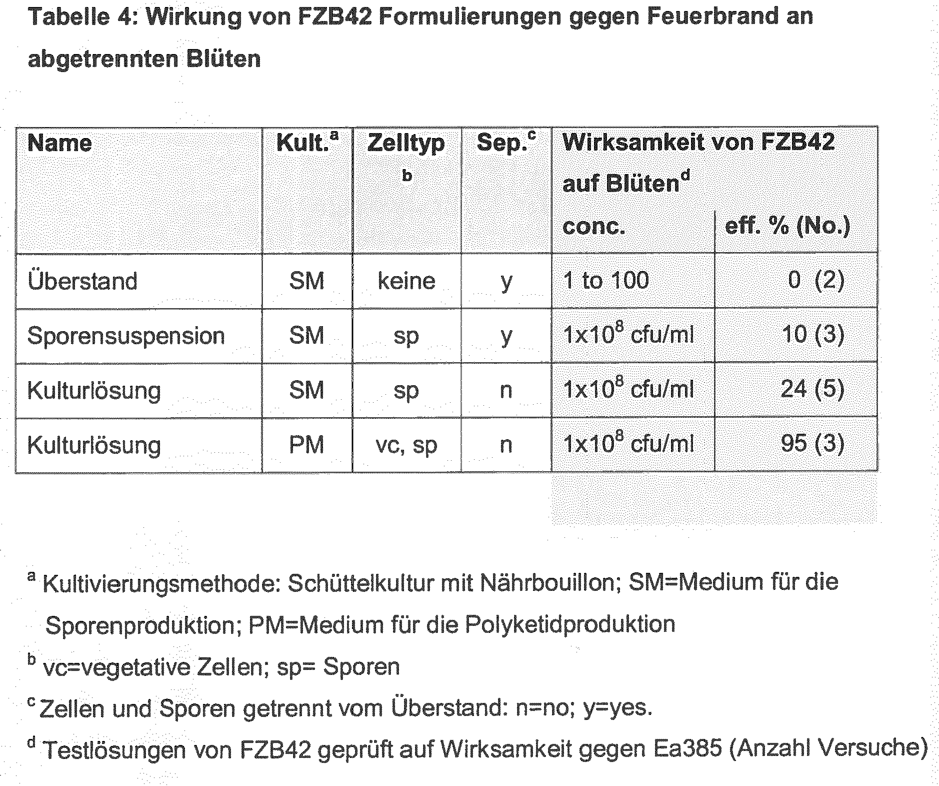

### Legende zu den Abbildungen

**Abb.1**
   HPLC analysis and identification of single metabolites in culture supernatants of FZB42
   and the mutant strains CH3 *(• sfp*)*,* CH8 (• *dfn*) and CH14 (• *bae* • *mln*) grown in Landy medium. mln, macrolactin; dfn, Diffizidin; bae, bacillaene.
**Abb.2**
   Bioautography and agar diffusion test of FZB42 and mutant strains CH3, CH8 and CH14
   grown in Landy medium. Indicator strains *Bacillus megaterium* (A) and *Erwinia amylovora* (B).
**Abb. 3**
   HPLC analysis (A) and agar diffusion test (B) with FZB42 and the mutant strains CH3 (• *sfp*), CH8 (• *dfn*)*,* CH14 (• *bae* • *mln*) and RS06 ((• *sfp • bac*) grown in GA medium.
**Abb. 4**
   Wirkung verschiedener *Bacillus* - Stämme kultiviert in Sporenmedium bei Anwendung von 1 % Kulturlösung gegen *Erwinia amylovora* im Blütentest im Vergleich zu FZB42 kultiviert in Sporenmedium und im Polyketid-Medium (PM) in verschiedenen Konzentrationen

### Literatur:

1. Broggini, G.A.L., B. Duffy, E. Holliger, H.-J. Schärer, C. Gessler, Patocci, A. Europ. J. Plant Pathol. 2005, 111, 93
2. Chen, X.H., A. Koumoutsi, R. Scholz, A. Eisenreich, K. Schneider, I. Heinemeyer et. al. , Nat. Biotech. 2007, 25, 1007
3. Chen, X.H., J. Vater, J. Piel, P. Franke, R. Scholz, K. Schneider, A. Koumoutsi, G. Hitzeroth, N. Grammel, A. W. Strittmatter, G. Gottschalk, R. D. Süssmuth, R. Borriss, J. Bacteriol. 2006, 188,4024
4. Landy, M., G. H. Warren, S. B. Rosenman, L. G. Colio, Proc. Soc. Exp. Biol. Med. 1948, 67, 539
5. Patel, P.S. , S. Huang, S. Fisher, D. Pirnik, C. Aklonis, L. Dean, E. Meyers, P. Fernandez, F. Mayerl, J. Antibiot. 1995, 48, 997
6. Perry, D., EP. Abraham, J. Gen Microbiol. 1979, 115, 213
7. Pusey, P. L. Phytopathology 1997, 87,1096
8. Reva, O., C. Dixelius, J., Meijer, F. G. Priest, FEMS Microbiol. Ecol. 2004, 48, 249
9. Schneider, K., X.H. Chen, J. Vater, P. Franke, G. Nicholson, R. Borriss, R. D. Süssmuth, J. Nat. Prod. 2007, 70, 1417

## Patentansprüche

1. Verwendung eines Mittels mit antibakteriellen Eigenschaften, bestehend aus Diffizidin und Bacilysin und *Bacillus amyloliquefaciens,* der mindestens eine der beiden Substanzen Diffizidin und Bacilysin produziert, zur Behandlung von bakteriellen Infektionen bei Kulturpflanzen, wobei das Mittel auf die Oberfläche von Pflanzen aufgebracht wird.

2. Verwendung nach Anspruch 1, **dadurch gekennzeichnet, dass** es pflanzenassoziiertes *Bacillus amyloliquefaciens* enthalt.

3. Verwendung nach Anspruch 1-2, **dadurch gekennzeichnet, dass** *Bacillus amyloliquefaciens* in Form seiner Sporen und/oder Teile aus seiner Flüssig - und/oder Festkultur eingesetzt wird.

4. Verwendung nach Anspruch 1-3, **dadurch gekennzeichnet, dass** der *Bacillus amyloliquefaciens* Stamm FZB42 eingesetzt wird.

5. Verwendung nach Anspruch 1-4, **dadurch gekennzeichnet, dass** der *Bacillus amyloliquefaciens* Stamm FZB24 mit der Hinterlegungsnummer DSM 10271 eingesetzt wird.

6. Verwendung nach Anspruch 1-5, zur Behandlung von Feuerbrand.

7. Verwendung nach Anspruch 1-6 zur Behandlung von Feuerbrand bei Obstgehölzen.

8. Verwendung nach Anspruch 1-7 zur Behandlung von Feuerbrand bei Äpfeln.

9. Verwendung nach Anspruch 1- 8 zur Vorbeugung von Feuerbrand.

10. Verwendung nach Anspruch 1-9, **dadurch gekennzeichnet, dass** das Mittel auf die Pflanzen aufgesprüht, aufgetupft und/oder aufgestrichen wird.

11. Verwendung nach Anspruch 1-10, **dadurch gekennzeichnet, dass** das Mittel auf die Blüten aufgetragen wird

## Claims

1. The use of a substance with antibacterial properties, consisting of difficidin and bacilysin and *bacillus amyloliquefaciens,* which produces at least one of the two substances difficidin and bacilysin, for the treatment of bacterial infections in cultivated plants, whereby the substance is applied to the surface of plants.

2. The use according to Claim 1, **characterized in that** it contains plant-associated *bacillus amyloliquefaciens.*

3. The use according to Claim 1-2, **characterized in that** *bacillus amyloliquefaciens* is used in the form of its spores and/or parts from its liquid and/or solid culture.

4. The use according to Claim 1-3, **characterized in that** the *bacillus amyloliquefaciens* strain FZB24 is used.

5. The use according to Claim 1-4, **characterized in that** the *bacillus amyloliquefaciens* strain FZB24 is used with file number DSM 10271.

6. The use according to Claim 1-5 for the treatment of fire blight.

7. The use according to Claim 1-6 for the treatment of fire blight in fruit trees.

8. The use according to Claim 1-7 for the treatment of fire blight in apples.

9. The use according to Claim 1-8 for the prevention of fire blight.

10. The use according to Claim 1-9, **characterized in that** the substance is sprayed, dabbed and/or brushed onto the plants.

11. The use according to Claim 1-10, **characterized in that** the substance is applied to the blossom.

## Revendications

1. Utilisation d'un agent aux propriétés antibactériennes composé de difficidine, de bacilysine et de *Bacillus amyloliquefaciens,* lesquelles produisent au moins de la difficidine ou de la bacilysine, pour traiter les infections bactériennes des plantes cultivées, l'agent étant appliqué sur la surface des plantes.

2. Utilisation conforme à la revendication 1 et **caractérisée par** la présence de *Bacillus amyloliquefaciens* associée aux plantes.

3. Utilisation conforme aux revendications 1 - 2 et **caractérisée par** l'utilisation de *Bacillus amyloliquefaciens* sous la forme de ses spores et/ou d'éléments issus de sa culture liquide et/ou solide.

4. Utilisation conforme aux revendications 1 - 3 et **caractérisée par** l'utilisation de *Bacillus* amyloliquefaciens, souche FZB24.

5. Utilisation conforme aux revendications 1 - 4 et **caractérisée par** l'utilisation de *Bacillus amyloliquefaciens,* souche FZB24 avec le numéro de dépôt DSM 10271.

6. Utilisation conforme aux revendications 1 - 5 pour traiter le feu bactérien.

7. Utilisation conforme aux revendications 1 - 6 pour traiter le feu bactérien des arbres fruitiers.

8. Utilisation conforme aux revendications 1 - 7 pour traiter le feu bactérien des pommiers.

9. Utilisation conforme aux revendications 1 - 8 pour prévenir le feu bactérien.

10. Utilisation conforme aux revendications 1 - 9 et **caractérisée par le fait que** l'agent est pulvérisé, tamponné ou étalé sur les plantes.

11. Utilisation conforme aux revendications 1 - 10 et **caractérisée par le fait que** l'agent est appliqué sur les fleurs.
